# EUROPEAN PATENT SPECIFICATION

(11) **EP 2 508 854 B1**
(45) Date of publication and mention of the grant of the patent: **28.10.2015**
(21) Application number: 10834753.5
(22) Date of filing: 26.11.2010
(51) Int. Cl.: G01G 5/04, G01G 19/10

(54) **FREIGHT WEIGHT MEASUREMENT APPARATUS AND METHOD USING COMPENSATION PRESSURE IN ACCORDANCE WITH TEMPERATURE CHANGE OF HYDRAULIC FLUID**
FRACHTGEWICHTMESSVORRICHTUNG UND -VERFAHREN UNTER VERWENDUNG EINES KOMPENSATIONSDRUCKS ENTSPRECHEND DER TEMPERATURVERÄNDERUNG DER HYDRAULISCHEN FLÜSSIGKEIT
APPAREIL DE MESURE DE POIDS DE FRET ET PROCÉDÉ UTILISANT UNE PRESSION DE COMPENSATION EN FONCTION DU CHANGEMENT DE TEMPÉRATURE DU FLUIDE HYDRAULIQUE

(30) Priority: 04.12.2009 KR 20090119673
(43) Date of publication of application: 10.10.2012
(73) Proprietor: Doosan Corporation, Jung-gu, Seoul 100-730 (KR)
(72) Inventor: LEE, Eui Dong, Seoul 152-755 (KR)
(74) Representative: Isarpatent
(86) International application number: PCT/KR2010/008451
(87) International publication number: WO 2011/068338

(56) References cited:
- EP-A2- 1 857 787
- DE-A1- 19 706 836
- JP-A- 2008 129 015
- KR-A- 20060 116 106
- KR-A- 20070 008 440
- KR-A- 20080 059 735
- KR-B1- 100 822 763
- US-A- 5 214 586
- US-A1- 2006 100 808

## Description

The present application discloses and apparatus and a method for measuring load weight.

US 2006/100808 A1 discloses a method and apparatus for performing temperature compensation for a payload measurement system.

In particular, a control unit is configured to compensate for, change, and set a pressure value under unloading and a pressure value under maximum loading, by a pressure compensation value determined in advance in accordance with the temperature variation of the driving oil that is sensed by a temperature sensor, and to measure the weight of the load by using the changed and set pressure values.

US 5 214 586 A discloses an aircraft weight and center of gravity indicator.

DE 197 06 836 A1 discloses an apparatus for measuring load weight of a hydraulically moveable load. A temperature sensor for determining the temperature of the hydraulic fluid derives a correction factor for measuring load weight.

### [Technical Field]

The present disclosure relates to an apparatus and a method for measuring load weight of a forklift truck, and more particularly, to an apparatus and a method for measuring load weight of a forklift truck according to pressure compensation in accordance with temperature variation of a driving oil.

### [Background Art]

In general, as a device for measuring handled load weight in a forklift truck, a pressure sensor is mounted in a lift cylinder line and measures the weight of a load, using the pressure in a lift cylinder.

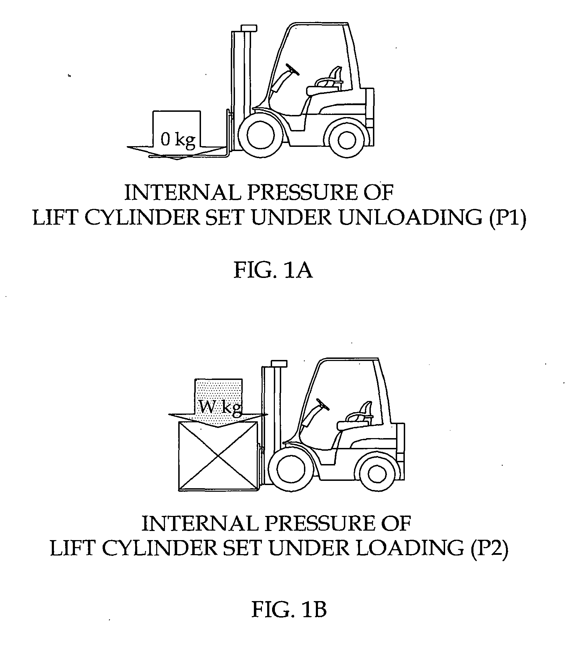

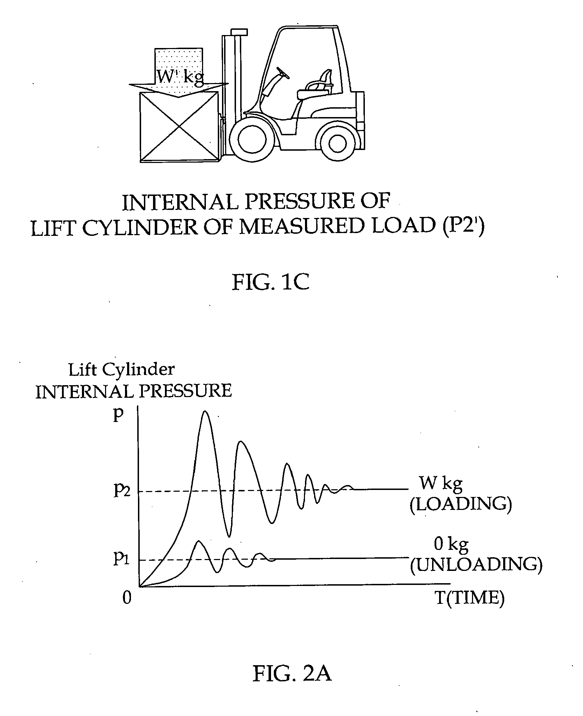

In order to measure the weight of a load using a pressure value, first, a pressure value (Zero-setting) P1 under an unloading state, as illustrated in FIG. 1A, and a pressure value P2 under a maximum applied loading state, as illustrated in FIG. 1B, are measured. The internal pressure of the cylinder line under the unloading state and the maximum loading state may be expressed, as in FIG. 2A.

The weight is measured by recognizing the pressure value changed when an actual load is lifted, on the basis of the pressure value P1 under an unloading state and the pressure value P2 under the maximum loading state that are measured as described above.

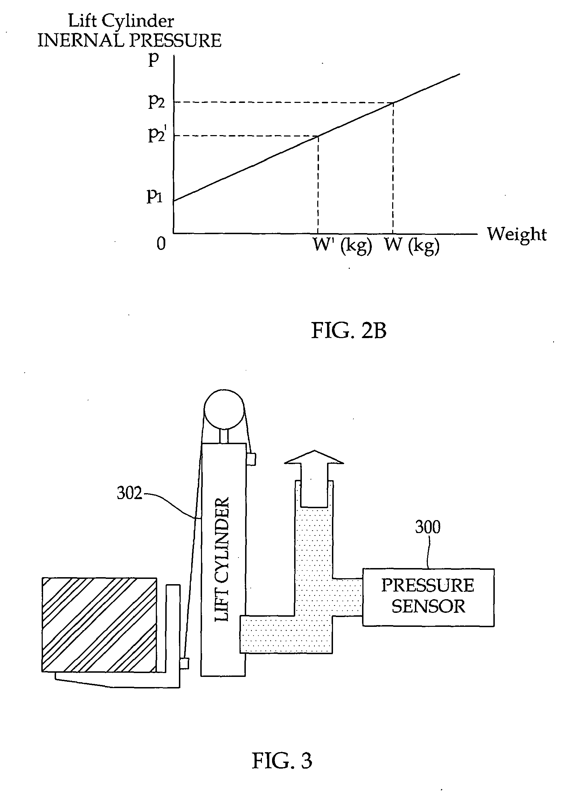

For example, when the value of the internal pressure of the lift cylinder for a measured load is measured as P2', as in FIG. 1C, the weight of the load according to the measured pressure value P2' measured as in FIG. 2B is calculated as W' and the calculated weight of the load is displayed on a monitor.

The apparatus for measuring load weight in a forklift truck may be illustrated, as in FIG. 3, and a pressure sensor 300 is mounted in the line of a lift cylinder 302.

In order to show the accurate weight of a load, the actual weight value is shown in 4 to 5 seconds under a loading state with the load lifted by a fork and the fork lifted 300mm from the ground.

When a forklift truck equipped with the apparatus for measuring load weight is used for a long period of time, the temperature of the driving oil changes and temperature variation of the driving oil changes the internal pressure of the lift cylinder.

Therefore, when the weight of a load is measured by a forklift truck that is used for a long period of time, a large error is generated and the accuracy deteriorates.

In order to solve the problem, it is necessary at the present time to measure the value of the internal pressure of a lift cylinder under unloading and the value of the internal pressure of the lift cylinder under the maximum weight loading every time measuring the weight of a predetermined load and then to perform zero setting and maximum load weight setting.

### [Disclosure]

### [Technical Problem]

Accordingly, the present disclosure provides an apparatus and a method for measuring load weight for removing inconvenience of separately setting a pressure value for each use, because the accuracy of the load weight deteriorates due to a problem that the pressure changes in accordance with temperature variation of the driving oil in a lift cylinder.

### [Technical Solution]

In order to achieve the above object, the present disclosure provides an apparatus for measuring load weight according to independent claim 1.

Further, the present disclosure provides a method of measuring load weight according to independent claim 2.

### [Advantageous Effects]

According to the present disclosure, it is possible to increase measurement accuracy by reducing a weight error that may be generated in accordance with temperature variation of the driving oil when measuring the weight of a handled load.

Even if the temperature of the driving oil changes, as in the related art, a worker does not change the pressure setting under unloading and maximum loading according to the changed temperature at each time and the internal pressure of the cylinder is compensated by sensing the changed temperature in a system, thereby automatically changing the pressure setting.

Therefore, it is possible to provide convenience for the driver of a forklift truck and improve accuracy in measurement.

### [Description of Drawings]

FIGS. 1 and 2 are exemplary views illustrating the internal pressure of a cylinder under common unloading/maximum loading.
FIG. 3 is view illustrating the internal configuration of an apparatus for measuring load weight in a forklift truck according to the related art.
FIG. 4 is a graph illustrating pressure and temperature variations of a driving oil in a lift cylinder, for illustrating an exemplary embodiment of the present disclosure.
FIG. 5 is a view illustrating the configuration of an apparatus for measuring load weight by using pressure compensation in accordance with temperature variation of a driving oil according to an exemplary embodiment of the present disclosure.
FIG. 6 is a flowchart illustrating a process of measuring load weight by using pressure compensation in accordance with temperature variation of a driving oil according to an exemplary embodiment of the present disclosure.
FIG. 7 is an exemplary view illustrating a table where a pressure compensation value is set in accordance with temperature variation according to an embodiment of the present disclosure.

### [Description of Main Reference Numerals of Drawings]

500: Pressure sensor 502: Lift cylinder
504: Temperature sensor 505: Control unit

### [Best Mode]

Hereinafter, preferred exemplary embodiments of the present disclosure will be described in detail with reference to the accompanying drawings. It should be noted that the same components refer to the same reference numerals anywhere as possible in the drawings. In the following description, specific detailed matters will be described and are provided for the more overall understanding of the present disclosure. Further, in describing the present disclosure, when it is determined that detailed description relating to well-known functions or configurations may make the subject matter of the present disclosure unnecessarily ambiguous, the detailed description will be omitted.

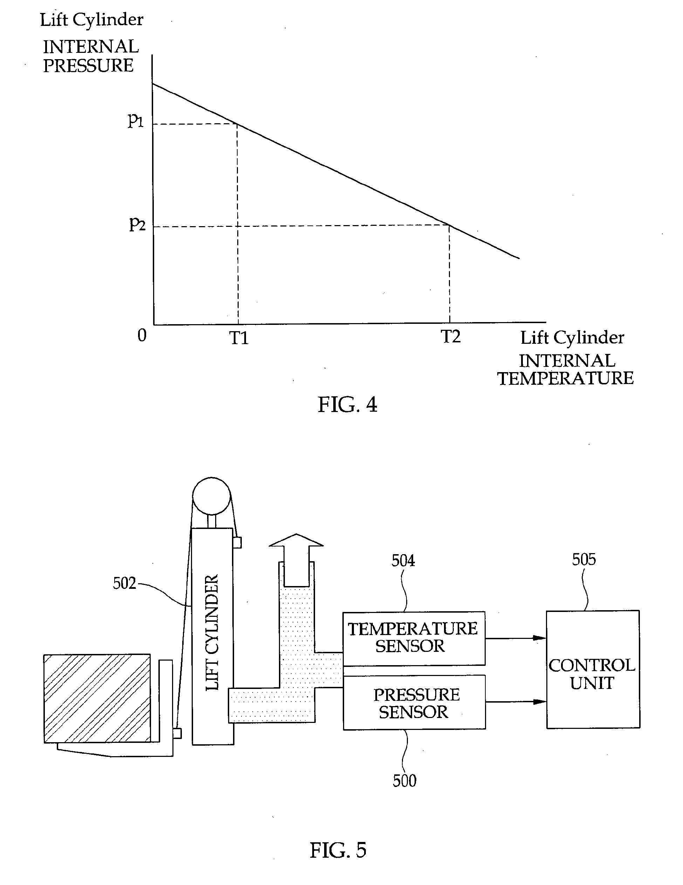

First, the pressure of a driving oil in a lift cylinder changes in the type illustrated in FIG. 4 in accordance with temperature variation.

The configuration of an apparatus for measuring load weight by using pressure compensation in accordance with temperature variation of a driving oil according to an exemplary embodiment of the present disclosure is described hereafter with reference to FIG. 5.

In an apparatus for measuring load weight in a forklift truck according to the present disclosure, a pressure sensor 500 and a temperature sensor 504 are mounted in the line of a lift cylinder 502.

The pressure sensor 500 measures the pressure of a driving oil and outputs the measured pressure value to a control unit 505.

The temperature sensor 504 senses temperature variation of the driving oil at each predetermined time and transmits the sensed temperature value to the control unit 505.

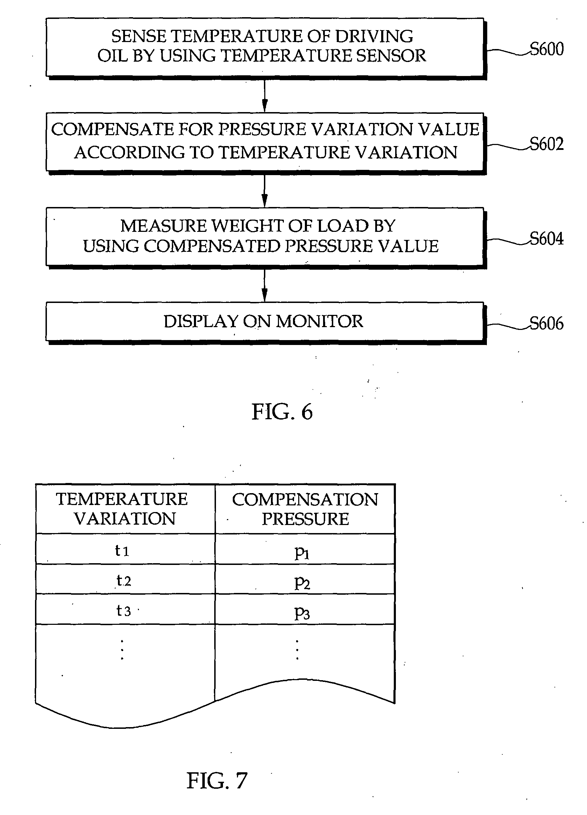

The control unit 505 stores in advance a graph illustrating pressure variation value of the driving oil according to temperature variation of the driving oil. The control unit 505 compensates for the pressure variation value that changes with temperature variation of the driving oil by predetermined pressure compensation, as in the graph stored in advance, using the temperature value sensed by the temperature sensor 504. The predetermined pressure compensation may be illustrated, as in the table of FIG. 7, and referring to FIG. 7, it can be seen that a pressure compensation value to be compensated in accordance with temperature variation was determined in advance.

When a pressure compensation value to be compensated in accordance with a temperature variation value of the driving oil is stored in advance, linear interpolation may be used to calculate the pressure compensation value according to a temperature value that is not defined. For example, for a temperature between t1 and t2, a pressure compensation value to be compensated may be calculated by linear interpolation between p1 and p2 values.

Thereafter, the control unit 505 measures the weight of a load, using the compensated pressure value and displays the measured weight on a monitor.

Accordingly, it is possible to increase measurement accuracy by reducing an weight error that may be generated in accordance with temperature variation of the driving oil when measuring the weight of a handled load.

Even if the temperature of the driving oil changes, a worker does not change the pressure setting under unloading and maximum loading according to the changed temperature at each time and the internal pressure of the cylinder is compensated by sensing the changed temperature in a system, thereby automatically changing the pressure setting.

FIG. 6 is a flowchart illustrating a process of measuring load weight according to pressure compensation in accordance with temperature variation of a driving oil according to an exemplary embodiment of the present disclosure.

First, the temperature of the driving oil is sensed by the temperature sensor (S600).

Thereafter, a pressure variation value that changes with temperature variation is compensated by a predetermined reference value (S602).

The weight of a load is measured by using the compensated pressure value and the measured weight is displayed on a monitor (S604 and S606).

The exemplary embodiments described above are provided to make those skilled in the art fully understand the scope of the present disclosure, such that the exemplary embodiments should be construed as not limiting the present disclosure, just as examples, and the present invention will be defined within claims.

### [Industrial Applicability]

According to the present disclosure, it is possible to increase measurement accuracy by reducing a weight error that may be generated in accordance with temperature variation of the driving oil when measuring the weight of a handled load.

## Claims

1. An apparatus for measuring load weight comprjsing:
a lift cylinder (502);
a pressure sensor (500) mounted in the line of the lift cylinder (502) and configured to measure an internal pressure of the lift cylinder (502);
a temperature sensor (504) mounted in the lift cylinder (502) and configured to sense a temperature of an oil in the lift cylinder (502); and
a control unit (505) configured to perform the following steps:
storing a plurality of value pairs in the apparatus, wherein each of the value pairs comprises a temperature and a compensate pressure value corresponding to the temperature;
determining whether a compensate pressure value corresponding to the sensed temperature is stored in the apparatus,
acquiring, if a compensate pressure value corresponding to the sensed temperature is stored in the apparatus, a compensated pressure according to the compensate pressure value stored in the apparatus corresponding to the sensed temperature and the sensed internal pressure;
acquiring, if a compensate pressure value corresponding to the sensed temperature is not stored in the apparatus, a first compensate pressure value stored in the apparatus corresponding to a first temperature greater than the sensed temperature, a second compensate pressure value stored in the apparatus corresponding to a second temperature less than the sensed temperature, a compensate pressure value corresponding to the sensed temperature using the first compensate pressure value and the second compensate pressure value, and a compensated pressure according to the sensed internal pressure and the compensate pressure value acquired from the first and the second compensate pressure values.

2. A method for measuring load weight by an apparatus comprising a lift cylinder (502), the method comprising:
measuring an internal pressure of the lift cylinder;
sensing a temperature of an oil in the lift cylinder (502);
storing a plurality of value pairs in the apparatus, wherein each of the value pairs comprises a temperature and a compensate pressure value corresponding to the temperature;
determining whether a compensate pressure value corresponding to the sensed temperature is stored in the apparatus;
acquiring, if a compensate pressure value corresponding to the sensed temperature is stored in the apparatus, a compensated pressure according to the compensate pressure value stored in the apparatus corresponding to the sensed temperature and the sensed internal pressure;
acquiring, if a compensate pressure value corresponding to the sensed temperature is not stored in the apparatus, a first compensate pressure value stored in the apparatus corresponding to a first temperature greater than the sensed temperature, a second compensate pressure value stored in the apparatus corresponding to a second temperature less than the sensed temperature, a compensate pressure value corresponding to the sensed temperature using the first compensate pressure value and the second compensate pressure value, and a compensated pressure according to the sensed internal pressure and the compensate pressure value acquired from the first and the second compensate pressure values.

## Patentansprüche

1. Vorrichtung zum Messen eines Lastgewichts, die Folgendes umfasst:
einen Hubzylinder (502);
einen Drucksensor (500), der in der Leitung des Hubzylinders (502) montiert ist und dafür ausgebildet ist, einen Innendruck des Hubzylinders (502) zu messen;
einen Temperatursensor (504), der in dem Hubzylinder (502) montiert ist und dafür ausgebildet ist, eine Temperatur eines Öls in dem Hubzylinder (502) abzufühlen; und
eine Steuereinheit (505), die dafür ausgebildet ist, die folgenden Schritte auszuführen:
Speichern mehrerer Wertpaare in der Vorrichtung, wobei jedes der Wertpaare eine Temperatur und einen Ausgleichsdruckwert, welcher der Temperatur entspricht, umfasst;
Bestimmen, ob ein Ausgleichsdruckwert, welcher der abgefühlten Temperatur entspricht, in der Vorrichtung gespeichert ist,
Erfassen, falls ein Ausgleichsdruckwert, welcher der abgefühlten Temperatur entspricht, in der Vorrichtung gespeichert ist, eines ausgeglichenen Drucks gemäß dem in der Vorrichtung gespeicherten Ausgleichsdruckwert, welcher der abgefühlten Temperatur und dem abgefühlten Innendruck entspricht;
Erfassen, falls ein Ausgleichsdruckwert, welcher der abgefühlten Temperatur entspricht, nicht in der Vorrichtung gespeichert ist, eines ersten in der Vorrichtung gespeicherten Ausgleichsdruckwertes, der einer ersten Temperatur entspricht, die größer als die abgefühlte Temperatur ist, eines zweiten in der Vorrichtung gespeicherten Ausgleichsdruckwertes, der einer zweiten Temperatur entspricht, die kleiner als die abgefühlte Temperatur ist, eines Ausgleichsdruckwertes, welcher der abgefühlten Temperatur entspricht, unter Verwendung des ersten Ausgleichsdruckwertes und des zweiten Ausgleichsdruckwertes, und eines ausgeglichenen Drucks gemäß dem abgefühlten Innendruck und dem Ausgleichsdruckwert, der aus dem ersten und dem zweiten Ausgleichsdruckwert erfasst wurde.

2. Verfahren zum Messen von Lastgewicht durch eine Vorrichtung, die einen Hubzylinder (502) umfasst, wobei das Verfahren Folgendes umfasst:
Messen eines Innendrucks des Hubzylinders;
Abfühlen einer Temperatur eines Öls in dem Hubzylinder (502);
Speichern mehrerer Wertpaare in der Vorrichtung, wobei jedes der Wertpaare eine Temperatur und einen Ausgleichsdruckwert, welcher der Temperatur entspricht, umfasst;
Bestimmen, ob ein Ausgleichsdruckwert, welcher der abgefühlten Temperatur entspricht, in der Vorrichtung gespeichert ist,
Erfassen, falls ein Ausgleichsdruckwert, welcher der abgefühlten Temperatur entspricht, in der Vorrichtung gespeichert ist, eines kompensierten Drucks gemäß dem in der Vorrichtung gespeicherten Ausgleichsdruckwert, welcher der abgefühlten Temperatur und dem abgefühlten Innendruck entspricht;
Erfassen, falls ein Ausgleichsdruckwert, welcher der abgefühlten Temperatur entspricht, nicht in der Vorrichtung gespeichert ist, eines ersten in der Vorrichtung gespeicherten Ausgleichsdruckwertes, der einer ersten Temperatur entspricht, die größer als die abgefühlte Temperatur ist, eines zweiten in der Vorrichtung gespeicherten Ausgleichsdruckwertes, der einer zweiten Temperatur entspricht, die kleiner als die abgefühlte Temperatur ist, eines Ausgleichsdruckwertes, welcher der abgefühlten Temperatur entspricht, unter Verwendung des ersten Ausgleichsdruckwertes und des zweiten Ausgleichsdruckwertes, und eines ausgeglichenen Drucks gemäß dem abgefühlten Innendruck und dem Ausgleichsdruckwert, der aus dem ersten und dem zweiten Ausgleichsdruckwert erfasst wurde.

## Revendications

1. Appareil de mesure de poids de charge comprenant :
un vérin de levage (502) ;
un capteur de pression (500) monté dans la conduite du vérin de levage (502) et configuré pour mesurer une pression interne du vérin de levage (502) ;
un capteur de température (504) monté dans le vérin de levage (502) et configuré pour détecter une température d'une huile dans le vérin de levage (502) ; et
une unité de commande (505) configurée pour réaliser les étapes suivantes :
stocker une pluralité de paires de valeurs dans l'appareil, dans lequel chacune des paires de valeurs comprend une température et une valeur de pression compensée correspondant à la température ;
déterminer si une valeur de pression compensée correspondant à la température détectée est stockée dans l'appareil ;
acquérir, si une valeur de pression compensée correspondant à la température détectée est stockée dans l'appareil, une pression compensée selon la valeur de pression compensée stockée dans l'appareil correspondant à la température détectée et la pression interne détectée ;
acquérir, si une valeur de pression compensée correspondant à la température détectée n'est pas stockée dans l'appareil, une première valeur de pression compensée stockée dans l'appareil correspondant à une première température supérieure à la température détectée, une seconde valeur de pression compensée stockée dans l'appareil correspondant à une seconde température inférieure à la température détectée, une valeur de pression compensée correspondant à la température détectée à l'aide de la première valeur de pression compensée et de la seconde valeur de pression compensée, et une pression compensée selon la pression interne détectée, et la valeur de pression compensée acquise à partir des première et seconde valeurs de pression compensée.

2. Procédé de mesure de poids de charge par un appareil comprenant un cylindre de levage (502), le procédé comprenant les étapes consistant à :
mesurer une pression interne du cylindre de levage ;
détecter une température d'une huile dans le cylindre de levage (502) ;
stocker une pluralité de paires de valeurs dans l'appareil, dans lequel chacune des paires de valeurs comprend une température et une valeur de pression compensée correspondant à la température ;
déterminer si une valeur de pression compensée correspondant à la température détectée est stockée dans l'appareil ;
acquérir, si une valeur de pression compensée correspondant à la température détectée est stockée dans l'appareil, une pression compensée selon la valeur de pression compensée stockée dans l'appareil correspondant à la température détectée et la pression interne détectée ;
acquérir, si une valeur de pression compensée correspondant à la température détectée n'est pas stockée dans l'appareil, une première valeur de pression compensée stockée dans l'appareil correspondant à une première température supérieure à la température détectée, une seconde valeur de pression compensée stockée dans l'appareil correspondant à une seconde température inférieure à la température détectée, une valeur de pression compensée correspondant à la température détectée à l'aide de la première valeur de pression compensée et de la seconde valeur de pression compensée, et une pression compensée selon la pression interne détectée, et la valeur de pression compensée acquise à partir des première et seconde valeurs de pression compensée.
